# EUROPÄISCHE PATENTANMELDUNG

(11) **EP 1 391 979 A2**
(43) Veröffentlichungstag der Anmeldung: **25.02.2004**
(21) Anmeldenummer: 03018357.8
(22) Anmeldetag: 13.08.2003
(51) Int. Cl.: H02K 15/03

(54) **Rotoranordnung für eine elektrische Maschine sowie Verfahren zu dessen Herstellung**

(30) Priorität: 22.08.2002 DE 10238401
(71) Anmelder: ZF Sachs AG, 97424 Schweinfurt (DE)
(72) Erfinder: Weimer, Jürgen, Dipl.-Ing., 97502 Euerbach (DE)

(57) **Zusammenfassung**

Es wird unter anderem beschrieben eine Rotoranordnung (20) für eine elektrische Maschine (10), insbesondere für eine Synchronmaschine, mit einem Rotorträge (21), aufweisend ein Rotor-Grundelement (22) und wenigstens einen Aufnahmebereich (23) zur Aufnahme von wenigstens einem Magnetelement (31), wobei der Aufnahmebereich (23) am Umfang (27) des Rotor-Grundelements (22) mit diesem verbunden ist. Um die Rotoranordnung (20) konstruktiv einfach und kostengünstig herstellen zu können, wird erfindungsgemäß vorgeschlagen, daß der wenigstens eine Aufnahmebereich (23) massiv ausgebildet ist. Es können beispielsweise mehrere Magnet-Einzelelemente (31) vorgesehen sein, die an mehreren Aufnahmebereichen (23) des Rotorträgers (21) angeordnet sind. Weiterhin wird eine elektrische Maschine sowie ein Verfahren zum Herstellen einer Rotoranordnung beschrieben.

## Beschreibung

Die vorliegende Erfindung betrifft zunächst eine Rotoranordnung für eine elektrische Maschine, insbesondere für eine Synchronmaschine, gemäß dem Oberbegriff von Patentanspruch 1. Weiterhin betrifft die Erfindung eine elektrische Maschine gemäß dem Oberbegriff von Patentanspruch 12 sowie ein Verfahren zum Herstellen einer Rotoranordnung gemäß dem Oberbegriff von Patentanspruch 14.

Bei elektrischen Maschinen handelt es sich generell um rotierende Maschinen, die mit Hilfe eines magnetischen Felds entweder nach dem Motorprinzip elektrische Energie in mechanische Energie oder nach dem Generatorprinzip mechanische Energie in elektrische Energie umwandeln.

Derartige elektrische Maschinen, die beispielsweise als Synchronmaschinen oder Asynchronmaschinen ausgebildet sein können, verfügen in der Regel über eine erste Maschinenkomponente und eine zweite Maschinenkomponente. Beide Maschinenkomponenten rotieren relativ zueinander, beziehungsweise sind relativ zueinander rotierbar. Die beiden Maschinenkomponenten sind radial benachbart zueinander angeordnet. Üblicherweise ist eine der beiden Maschinenkomponenten in bezug auf die Drehachse der elektrischen Maschine radial innen liegend von der jeweils anderen Maschinenkomponente angeordnet. Je nach Ausgestaltung der elektrischen Maschine kann es sich bei einer Maschinenkomponente um eine Rotoranordnung und bei der anderen Maschinenkomponente um eine Statoranordnung handeln.

Die Statoranordnung, auch Ständer genannt, ist in der Regel der feststehende Teil, während die Rotoranordnung, auch Läufer genannt, der umlaufende Teil ist.

Ein Einsatzgebiet für elektrische Maschinen sind Fahrzeuge aller Art. In Fahrzeugen werden elektrische Maschinen beispielsweise in Funktion als Lichtmaschine eingesetzt, wobei diese elektrischen Maschinen nach dem Generatorprinzip funktionieren und elektrische Energie erzeugen, die dann anderen Verbrauchern zur Verfügung gestellt werden kann. In anderer Anwendung werden elektrische Maschinen in Fahrzeugen beispielsweise auch als Starter-Generatoren eingesetzt. Bei einem Starter-Generator handelt es sich beispielsweise um eine elektrische Maschine, die zwischen der Antriebswelle eines Antriebsaggregats, beispielsweise der Kurbelwelle eines Verbrennungsmotors, und einem Bauelement der Antriebseinheit, beispielsweise einer Kupplung, einem Getriebe oder dergleichen, im Antriebsstrang des Fahrzeugs angeordnet sein kann. Mit Hilfe des Starter-Generators kann zum einen das Antriebsaggregat des Fahrzeugs gestartet werden. Weiterhin kann dieser im Fahrbetrieb als Generator arbeiten, also Starter und Generator im Fahrzeug ersetzen.

Die Statoranordnung der elektrischen Maschine besteht in der Regel aus einem Blechpaket, das aus einem Joch und einer Anzahl von Zähnen gebildet ist. In den Nuten zwischen den Zähnen sind die elektrischen Wicklungen angeordnet. Wenn diese Wicklungen von einem Strom durchflossen werden, wird dadurch das magnetische Feld der elektrischen Maschine erzeugt.

Die Rotoranordnung weist bisher ebenfalls wenigstens ein Blechpaket auf. Die Blechpakete müssen zusammengehalten und mit einem Rotor-Grundelement verbunden werden. Das ist zum einen konstruktiv aufwendig. Weiterhin ist die Herstellung derartiger Rotoranordnungen kostenintensiv.

Ausgehend hiervon liegt der vorliegenden Erfindung die Aufgabe zu Grunde, eine Rotoranordnung der bekannten Art derart weiterzubilden, daß diese kostengünstig und gleichzeitig auf konstruktiv einfache Weise herstellbar ist. Darüber hinaus soll eine verbesserte elektrische Maschine sowie ein verbessertes Verfahren zum Herstellen einer Rotoranordnung bereitgestellt werden.

Diese Aufgabe wird erfindungsgemäß gelöst durch eine Rotoranordnung mit den Merkmalen gemäß dem unabhängigen Patentanspruch 1, eine elektrische Maschine mit den Merkmalen gemäß dem unabhängigen Patentanspruch 12 sowie ein Verfahren gemäß dem unabhängigen Patentanspruch 14. Weitere Vorteile, Merkmale, Details, Aspekte und Effekte der Erfindung ergeben sich aus den Unteransprüchen, der Beschreibung sowie den Zeichnungen. Merkmale und Details, die im Zusammenhang mit der erfindungsgemäßen Rotoranordnung und/oder der elektrischen Maschine beschrieben sind, gelten dabei selbstverständlich auch im Zusammenhang mit dem erfindungsgemäßen Verfahren, und jeweils umgekehrt.

Gemäß dem ersten Aspekt der Erfindung wird eine Rotoranordnung für eine elektrische Maschine, insbesondere für eine Synchronmaschine, bereitgestellt, mit einem Rotorträger, aufweisend ein Rotor-Grundelement und wenigstens einen Aufnahmebereich zur Aufnahme von wenigstens einem Magnetelement, wobei der Aufnahmebereich am Umfang des Rotor-Grundelements mit diesem verbunden ist. Die Rotoranordnung ist erfindungsgemäß dadurch gekennzeichnet, daß der wenigstens eine Aufnahmebereich massiv ausgebildet ist.

Eine solche Rotoranordnung kann auf konstruktiv einfache Weise besonders kostengünstig gefertigt werden. Überraschenderweise wurde nunmehr herausgefunden, daß die Aufnahmebereiche von Rotoranordnungen, insbesondere dann, wenn sie in Synchronmaschinen eingesetzt werden, nicht mehr in Form von Blechpaketen hergestellt werden müssen. Vielmehr können die Aufnahmebereiche auch massiv ausgebildet werden, ohne daß die elektrische Maschine in ihrer Leistungsfähigkeit beeinträchtigt wird.

Die Rotoranordnung besteht generell aus einem Rotorträger und wenigstens einem Magnetelemente, vorzugsweise zwei oder mehr Magnetelementen. Das wenigstens eine Magnetelement ist am Rotorträger befestigt. Der Rotorträger besteht grundsätzlich aus einem Rotor-Grundelement und wenigstens einem Aufnahmebereich für das wenigstens eine Magnetelement. Vorzugsweise weist der Rotorträger zwei oder mehr Aufnahmebereiche auf. Der wenigstens eine Aufnahmebereich ist am Umfang des Rotor-Grundelements mit diesem verbunden. Der Rotorträger besteht somit aus den Komponenten Rotor-Grundelement und dem/den Aufnahmebereich(en). Bei dem wenigstens einen Aufnahmebereich und dem wenigstens einen Magnetelement handelt es sich um Bestandteile des Rotor-Magnetkreises.

Wie im Rahmen der Beschreibungseinleitung bereits dargestellt wurde, war der wenigstens eine Aufnahmebereich einer Rotoranordnung von einer elektrischen Maschine bisher derart ausgeführt, daß dünne Einzelbleche, in der Regel Elektrobleche, in typischen Schichtstärken von 0.25 bis 1 mm zu Blechpaketen gestapelt wurden. Grund hierfür war, daß dadurch die durch Wirbelströme erzeugten ohmschen Verluste im Blechpaket sinnvoll reduziert werden können.

Insbesondere im Zusammenhang mit Synchronmaschinen wurde nun überraschenderweise herausgefunden, daß die Wechselfelder im Rotorjoch nur gering sind. Weiterhin sind die Wechselfelder auf Oberwellen und Unterwellen beschränkt. Die Grundwelle läuft somit synchron mit der Rotoranordnung um und erzeugt keine Verluste.

Aus diesem Grund ist es erfindungsgemäß nunmehr möglich, den/die Aufnahmebereich(e) der Rotoranordnung massiv auszuführen. Bei dem Aufnahmebereich handelt es sich vorzugsweise jeweils um ein einziges, entsprechend dick dimensioniertes Elektroblech, das den magnetischen Fluß führen kann. Die Dicke des wenigstens einen Aufnahmebereichs kann je nach Einsatzgebiet sowie den Anforderungen an die Rotoranordnung variieren. Dabei ist die Dicke insbesondere nach Festigkeits- und Magnetkreis-Gesichtspunkten (etwa maximale Induktion) auszuwählen. Die Dicke des wenigstens einen Aufnahmebereichs kann beispielsweise, jedoch nicht ausschließlich, etwa 4 bis 8 mm betragen.

Dabei ist die Erfindung nicht auf bestimmte Typen elektrischer Maschinen beschränkt. Vorteilhaft handelt es sich bei der elektrischen Maschine, für die die erfindungsgemäße Rotoranordnung bestimmt ist, um eine Synchronmaschine. Natürlich ist die erfindungsgemäße Rotoranordnung auch in Asynchronmaschinen denkbar. Die elektrische Maschine kann dabei vorteilhaft wechselstromerregt sein.

Vorzugsweise kann es sich bei der elektrischen Maschine um eine permanenterregte Maschine handelt, wobei der Magnetkreis mittels Permanentmagneten erzeugt wird. Eine derartige Maschine wird im weiteren Verlauf der Beschreibung näher erläutert, ohne daß die Erfindung auf diese Ausführungsform beschränkt ist.

Die elektrische Maschine kann sowohl in Innenläuferbauweise als auch in Außenläuferbauweise ausgestaltet sein.

Neben den bereits vorstehend genannten Vorteilen hat die erfindungsgemäße Ausgestaltung der Rotoranordnung weiterhin den Vorteil, daß diese auf einfache und effiziente Weise gekühlt werden kann. Schließlich ist es auch möglich, die Rotoranordnung wesentlich kleiner und kompakter - als bisher möglich-auszugestalten.

Das wenigstens eine Magnetelement kann auf beliebige Weise mit dem Rotorträger, beziehungsweise dem wenigstens einen Aufnahmebereich, verbunden sein. So ist es beispielsweise denkbar, das wenigstens eine Magnetelement mittels einer Klebverbindung, einer Schweißverbindung, einer Lötverbindung oder dergleichen mit dem Rotorträger zu verbinden. Natürlich sind auch andere Verbindungsarten und-techniken denkbar, so daß die Erfindung nicht auf die genannten Beispiele beschränkt ist.

Vorteilhaft können zwei oder mehr Aufnahmebereiche vorgesehen sein. Die Aufnahmebereiche sind dann vorteilhaft jeweils beabstandet zueinander am Rotor-Grundelement angeordnet. In einem solchen Fall befindet sich zwischen zwei benachbarten Aufnahmebereichen jeweils eine Lücke.

Die Größe der Lücke, beziehungsweise der Abstand zweier benachbarter Aufnahmebereiche, ebenso wie die Anzahl der vorhandenen Aufnahmebereiche, kann je nach Spezifikation der elektrischen Maschine unterschiedlich sein. Die Erfindung ist nicht auf bestimmte Ausgestaltungsformen beschränkt.

Ebenso können vorteilhaft jeweils zwei oder mehr Magnetelemente vorgesehen sein.

Vorteilhaft kann der wenigstens eine Aufnahmebereich sowie das Rotor-Grundelement einteilig ausgebildet sein. Auf diese Weise kann der Rotorträger über ein geeignetes Herstellungsverfahren, beispielsweise einen Stanzvorgang oder dergleichen, auf einfache und kostengünstige Weise hergestellt werden. Natürlich ist es auch denkbar, daß das Rotor-Grundelement und der wenigstens eine Aufnahmebereich zunächst in separaten Fertigungsschritten hergestellt und anschließend zum Rotorträger zusammengefügt werden, beispielsweise mittels Kleben, Löten, Schweißen oder dergleichen. Beispielsweise kann das Rotor-Grundelement in einem solchen Fall als Kreisscheibe hergestellt werden. Der wenigstens eine Aufnahmebereich kann dann beispielsweise in Form eines Rohrabschnitts ausgebildet und am Rotor-Grundelement befestigt sein.

In weiterer Ausgestaltung kann/können der/die Aufnahmebereich(e) im Betriebszustand des Rotorträgers in Bezug auf die Drehachse des Rotorträgers in einem Winkel vom Rotor-Grundelement abragend an diesem angeordnet sein. Vorteilhaft beträgt der Winkel 90 Grad, wobei je nach Ausgestaltung und Einsatzzweck der Rotoranordnung auch andere Winkel zulässig sind.

Wenn das Rotor-Grundelement und der/die Aufnahmebereich(e) einteilig ausgebildet ist/sind und mittels eines geeigneten Herstellungsverfahrens, etwa eines Stanzverfahrens, hergestellt worden sind, kann/können der/die Aufnahmebereich(e) nach Fertigstellung des Rotorträgers anschließend um den gewünschten Winkel umgebogen werden. Dies kann beispielsweise, jedoch nicht ausschließlich, mittels Kalt- oder Warmverformung erfolgen.

Vorteilhaft kann das wenigstens eine Magnetelement als massives Magnetelement, insbesondere als massives Permanentmagnetelement, ausgebildet sein. Es ist auch denkbar, daß Magnetelement aus einer Anzahl von Magnetelement-Segmenten zu bilden, wobei die einzelnen Segmente über eine geeignete Verbindung, beispielsweise eine Klebverbindung oder dergleichen, miteinander verbunden sind. Bei dem Klebmittel handelt es sich dann vorzugsweise um eine nicht elektrisches Klebmittel.

Das/die Magnetelement(e) kann/können auf unterschiedlichste Art und Weise auf den Aufnahmebereichen des Rotorträgers angeordnet werden. Einige nicht ausschließliche Beispiele werden nachfolgend beschrieben, wobei die Erfindung nicht auf die genannten Beispiele beschränkt ist.

Beispielsweise kann auf einem Aufnahmebereich jeweils ein Magnetelement angeordnet sein. Dabei erfolgt die Magnetisierung hierbei vorzugsweise abwechselnd je Aufnahmebereich. Das Magnetelement auf einem Aufnahmebereich hat beispielsweise die Magnetisierung "Nord", das Magnetelement auf dem nächsten, benachbarten Aufnahmebereich die Magnetisierung "Süd", das Magnetelement auf dem dann folgenden Aufnahmebereich wieder "Nord", und so weiter.

In anderer Ausgestaltung ist denkbar, daß auf einem Aufnahmebereich jeweils zwei Magnetelemente angeordnet sind. Bei zwei benachbarten Aufnahmebereichen sind die Magnetpole dabei vorteilhaft so ausgerichtet, daß diese nebeneinander, aber auf verschiedenen, benachbarten Aufnahmebereichen liegenden Einzelmagnete die gleiche Ausrichtung aufweisen. Diese beiden Einzelelemente zusammen ergeben dann einen Magnetpol im elektromaschinenbaulichen Sinne. Die Ausrichtung der Magnetpole am Umfang der Rotoranordnung ist dann immer abwechselnd.

In weiterer Ausgestaltung kann vorgesehen sein, daß ein Magnetelement jeweils auf zwei benachbarten Aufnahmebereichen angeordnet ist und daß sich das Magnetelement über eine Lücke zwischen den zwei beabstandeten, benachbarten Aufnahmebereichen hinweg erstreckt. Dabei können auf einem Aufnahmebereich jeweils Teilbereiche von zwei Magnetelementen angeordnet sein. Bei den Magnetelementen kann es sich dann um größere Einzelelemente handeln, die über der Lücke zwischen zwei benachbarten Aufnahmebereichen angeordnet sind, wobei jeweils ein Teilbereich des Magnetelements auf einem anderen Aufnahmebereich angeordnet ist. Das Magnetelement bildet somit eine Art Brücke zwischen zwei benachbarten Aufnahmebereichen.

Vorteilhaft können zwei Magnetelemente oder zwei Teilbereiche von Magnetelementen, die auf einem Aufnahmebereich angeordnet sind, über ein Abstandhalterelement voneinander getrennt sein. Die Abstandhalterelemente können auf unterschiedlichste Arten ausgebildet und auf den Aufnahmebereichen angeordnet sein.

Wenn der Rotorträger beispielsweise mittels eines Stanzverfahrens hergestellt wird, kann es sich bei den Abstandhalterelementen etwa um eingestanzte Konturen handeln, die beim Stanzen des Rotorträgers mit eingeprägt werden. Dies macht eine sehr einfache und kostengünstige Herstellung des Rotorträgers möglich.

In weiterer Ausgestaltung kann wenigstens ein Fixierelement zum Fixieren des wenigstens einen Magneelements und/oder zum Fixieren des wenigstens einen Aufnahmebereichs vorgesehen sein. Das Fixierelement hat generell die Aufgabe, ein Aufbiegen des wenigstens einen Aufnahmebereichs durch die auftretenden Fliehkräfte beim Betrieb der Rotoranordnung zu unterdrücken. Vorzugsweise ist das Fixierelement am äußeren, freien Ende des wenigstens einen Aufnahmebereichs vorgesehen. Bei dem Fixierelement kann es sich beispielsweise um einen entsprechend ausgebildeten Fixierring handeln. Natürlich ist die Erfindung nicht auf bestimmte Arten von Fixierelementen beschränkt, so daß auch andere Ausgestaltungsformen von Fixierelementen, beispielsweise in Form von Klemmeinrichtungen, Clip-Verschlüssen und dergleichen denkbar sind.

Der Rotorträger kann weiterhin durch geeignete Stabilisierungselemente in seiner Stabilität verstärkt werden. Dies kann beispielsweise, jedoch nicht ausschließlich, durch das Einprägen entsprechender Konturen oder dergleichen erfolgen.

Die Rotoranordnung ist vorteilhaft für den Betrieb in Außenläuferbauweise konzipiert, was bedeutet, daß die Rotoranordnung um die Statoranordnung rotiert und radial außerhalb von dieser angeordnet ist. Natürlich können mit der erfindungsgemäßen Ausgestaltung des Magnetkreises auch Rotoranordnungen in Innenläuferbauweise realisiert werden. In diesem Fall ist es vorteilhaft, wenn der Magnetkreis, beziehungsweise die Einzelelemente des Magnetkreises in geeigneter Weise bandagiert werden.

Gemäß dem zweiten Aspekt der Erfindung wird eine Elektrische Maschine bereitgestellt, mit einer Rotoranordnung und einer Statoranordnung , die erfindungsgemäß dadurch gekennzeichnet ist, daß die Rotoranordnung in der wie vorstehend beschriebenen, erfindungsgemäßen Weise ausgebildet ist.

Zu den Vorteilen, Wirkungen, Effekten sowie der Funktionsweise der elektrischen Maschine wird auf die vorstehenden Ausführungen zur erfindungsgemäßen Rotoranordnung vollinhaltlich Bezug genommen und hiermit verwiesen.

In bevorzugter Ausgestaltung handelt es sich bei der elektrischen Maschine um eine Synchronmaschine, insbesondere um eine permanenterregte Synchronmaschine. Die elektrische Maschine ist vorteilhaft in Außenläuferbauweise ausgebildet.

Besonders vorteilhaft kann die elektrische Maschine als Starter-Generator ausgebildet sein. Im Kraftfahrzeugsektor wird ein solcher Starter-Generator in Zukunft immer mehr als Ersatz für die heutigen separaten Bauteile, Anlasser und Generator zum Einsatz kommen. Im Vergleich zu den bisherigen Lösungen weist ein Starter-Generator einen besseren Wirkungsgrad, ein geringeres Gewicht sowie eine höhere elektrische Leistung auf. Es wird damit möglich, Energieverbraucher, die heute mechanisch angetrieben werden, künftig bedarfsgerecht elektrisch anzutreiben. Der Starter-Generator kann somit nicht nur zum Starten und Stoppen eines Antriebsaggregats, beispielsweise eines Verbrennungsmotors, verwendet werden, sondern er kann auch während des Motorbetriebs verschiedene Funktionen übernehmen, wie beispielsweise Bremsfunktionen, Boosterfunktionen, Batteriemanagement, aktive Schwingungsdämpfung, Synchronisierung des Antriebsaggregats oder dergleichen.

Gemäß einem dritten Aspekt der Erfindung wird ein Verfahren zum Herstellen einer Rotoranordnung für eine elektrische Maschine bereitgestellt, das durch die Schritte
A) Herstellen eines Rotorträgers, mit einem Rotor-Grundelement und wenigstens einem massiven Aufnahmebereich, wobei der wenigstens eine Aufnahmebereich am Umfang des Rotor-Grundelements mit diesem verbunden ist; und
B) Befestigen von wenigstens einem Magnetelement an dem wenigstens einen massiven Aufnahmebereich
gekennzeichnet ist.

Zu den Vorteilen, Wirkungen, Effekten sowie der Funktionsweise des Verfahrens wird ebenfalls auf die vorstehenden Ausführungen zur erfindungsgemäßen Rotoranordnung sowie zur erfindungsgemäßen elektrischen Maschine vollinhaltlich Bezug genommen und hiermit verwiesen.

Vorteilhaft kann das Verfahren zum Herstellen einer wie vorstehend beschriebenen, erfindungsgemäßen Rotoranordnung, insbesondere in einer wie vorstehend beschriebenen erfindungsgemäßen elektrischen Maschine, eingesetzt werden.

Vorzugsweise kann der Schritt des Herstellens des Rotorträgers umfassen: Herstellen des Rotor-Grundelements sowie von zwei oder mehr Aufnahmebereichen in solch einer Weise, daß die Aufnahmebereiche am Umfang des Rotor-Grundelements jeweils beabstandet zueinander mit diesem verbunden sind.

In weiterer Ausgestaltung können das Rotor-Grundelement und die Aufnahmebereiche einteilig hergestellt werden, wobei das Rotor-Grundelement und die Aufnahmebereiche radial zunächst in einer Ebene liegen und wobei die Aufnahmebereiche anschließend in Bezug auf die Drehachse des Rotorträgers in einem Winkel vom Rotor-Grundelement abragend umgebogen werden.

Vorzugsweise kann das/die Magnetelement(e) in Form eines oder mehrerer massiver Magnet-Einzelelemente an dem Rotorträger befestigt werden.

Beispielsweise ist denkbar, daß jeweils ein Magnetelement auf einem Aufnahmebereich des Rotorträgers angeordnet wird. In anderer Ausgestaltung ist ebenso denkbar, daß jeweils zwei Magnetelemente auf einem Aufnahmebereich des Rotorträgers angeordnet werden. In einer anderen Ausgestaltung kann ein Magnetelement jeweils auf zwei benachbarten Aufnahmebereichen des Rotortägers angeordnet werden, wobei sich das Magnetelement über eine Lücke zwischen den zwei beabstandeten, benachbarten Aufnahmebereichen hinweg erstreckt und wobei auf einem Aufnahmebereich jeweils zwei Teilbereiche von zwei Magnetelementen angeordnet werden.

Während des Herstellungsvorgangs des Rotortägers können vorteilhaft Konturen in das Rotor-Grundelement und/oder die Aufnahmebereiche eingebracht werden. Wie weiter oben bereits erläutert wurde, können diese Konturen zur Steigerung der Stabilität des Rotorträgers, als Abstandhalter zwischen zwei Magnetelementen auf ein und demselben Aufnahmebereich, oder dergleichen dienen.

Vorteilhaft kann der wenigstens eine Aufnahmebereich und/oder das wenigstens eine Magnetelement über wenigstens ein Fixierelement fixiert werden.

Die Erfindung wird nun an Hand von Ausführungsbeispielen unter Bezugnahme auf die beiliegenden Zeichnungen näher erläutert. Es zeigen:
- Figur 1: eine erste Ausführungsform der erfindungsgemäßen elektrischen Maschine, in der eine erfindungsgemäße Rotoranordnung vorgesehen ist;
- Figur 2: den Rotorträger der erfindungsgemäßen Rotoranordnung gemäß Figur 1 nach dessen Herstellung und bevor die Magnetelemente an diesem angeordnet worden sind; und
- Figur 3: einen Ausschnitt aus einer weiteren Ausführungsform der erfindungsgemäßen Rotoranordnung, in dem verschiedene Anordnungsmöglichkeiten von Magnetelementen am Rotorträger dargestellt sind.

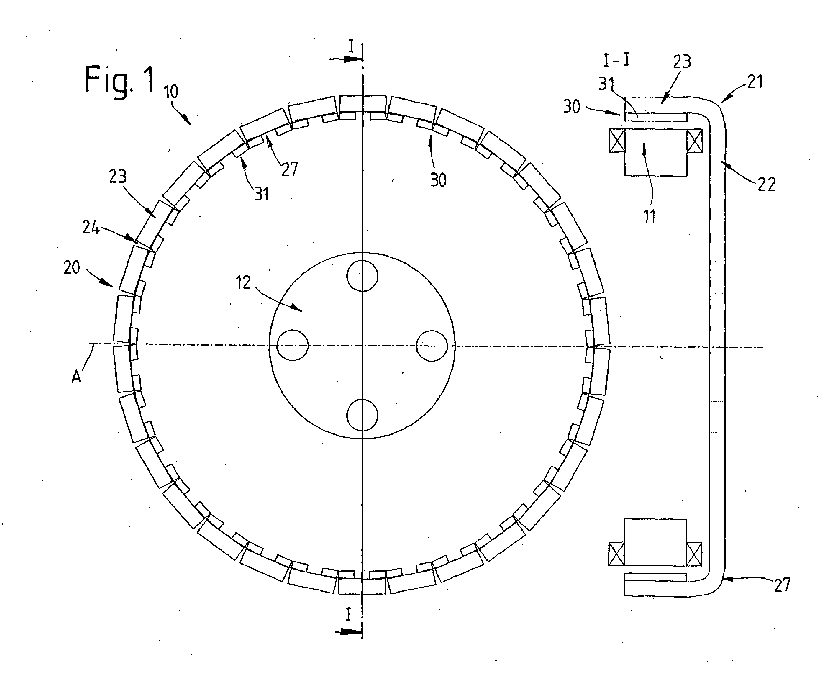

In Figur 1 ist eine elektrische Maschine 10 dargestellt, bei der es sich beispielsweise um einen Starter-Generator in einem Kraftfahrzeug handeln kann. Die elektrische Maschine 10 ist im vorliegenden Beispiel als permanenterregte Synchronmaschine in Außenläuferbauweise ausgebildet. Dazu weist die elektrische Maschine zunächst eine Statoranordnung 11 sowie eine Rotoranordnung 20 auf, wobei die Rotoranordnung 20 in Bezug auf die Drehachse A radial außenliegend von der Statoranordnung 11 angeordnet ist. Die Rotoranordnung 20 ist über eine Wellenanbindung 12 mit einer nicht dargestellten Antriebswelle verbunden.

Die Rotoranordnung 20 besteht zunächst aus einem Rotorträger 21, der wiederum ein Rotor-Grundelement 22 aufweist. Am Umfang 27 des Rotor-Grundelements 22 sind eine Reihe von Aufnahmebereichen 23 vorgesehen, die jeweils beabstandet zueinander auf dem Umfang 27 des Rotor-Grundelements 22 angeordnet sind. Das bedeutet, daß zwischen zwei benachbarten Aufnahmebereichen 23 jeweils eine Lücke 24 vorgesehen ist. Die Magnetelemente 31 sowie die Aufnahmebereiche 23 bilden den Magnetkreis 30 der Rotoranordnung 20. Gleichzeitig sind die Aufnahmebereich 23 neben dem Rotor-Grundelement 22 auch Bestandteil des Rotorträgers 21.

Die Aufnahmebereiche 23 dienen zur Aufnahme von Magnetelementen 31. Damit die Rotoranordnung 20 konstruktiv einfach und vor allem kostengünstig hergestellt werden kann, ist erfindungsgemäß vorgesehen, daß die Aufnahmebereiche 23 massiv ausgebildet sind. Im vorliegenden Ausführungsbeispiel bestehen die Magnetelemente 31 aus einer Anzahl von massiven Einzelelementen, im Beispiel Permanentmagneten. Die Magnetelemente 31 können aber auch zunächst in Form von mehreren Magnet-Segmenten hergestellt werden, wobei die Einzelsegmente über eine geeignete Klebverbindung zusammengefaßt werden.

Die Magnetelemente 31 sind in Bezug auf die Drehachse A innen (das heißt in Richtung der Statoranordnung) auf den Aufnahmebereichen 23 angeordnet. Die Befestigung der Einzelelemente 31 kann auf unterschiedlichste Weise erfolgen. Beispielsweise können die Einzelelemente auf den Aufnahmebereichen aufgeklebt werden.

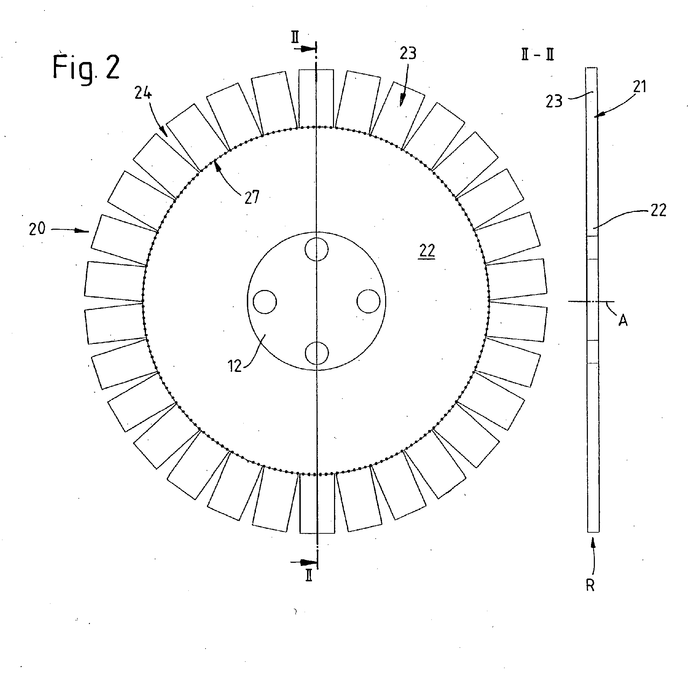

Der Rotorträger 21 ist im vorliegenden Ausführungsbeispiel einteilig ausgebildet. Seine Herstellung wird nun unter Bezugnahme auf die Figur 2 näher erläutert.

Zunächst wird der Rotorträger 21, das heißt das Rotor-Grundelement 22 sowie die Aufnahmebereiche 23 einteilig hergestellt, was beispielsweise mittels eines Stanzverfahrens oder dergleichen erfolgen kann. Die Dicke der Aufnahmebereiche kann beispielsweise zwischen 4 und 8 mm liegen. Bei den Aufnahmebereichen 23 handelt es sich um ein einziges Elektroblech mit einer entsprechend groß gewählten Dicke, das den magnetischen Fluß führen kann.

Nach Beendigung dieses Herstellungsschritts liegen die einzelnen Bestandteile des Rotorträgers 21 radial (bezogen auf die Drehachse A des Rotorträgers) zunächst in einer Ebene R. In einem anschließenden Fertigungsschritt werden die Aufnahmebereiche 23 am Umfang 27 des Rotor-Grundteils 22 um einen bestimmten Winkel in Bezug auf die Drehachse A des Rotorträgers 21 (siehe auch Figur 1) umgebogen. Im vorliegenden Beispiel beträgt der Winkel etwa 90 Grad. Das Umbiegen kann beispielsweise mittels Kalt- oder Warmverformung erfolgen. An dem so fertiggestellten Rotorträger 21 werden anschließend die Magnetelemente 31 angeordnet.

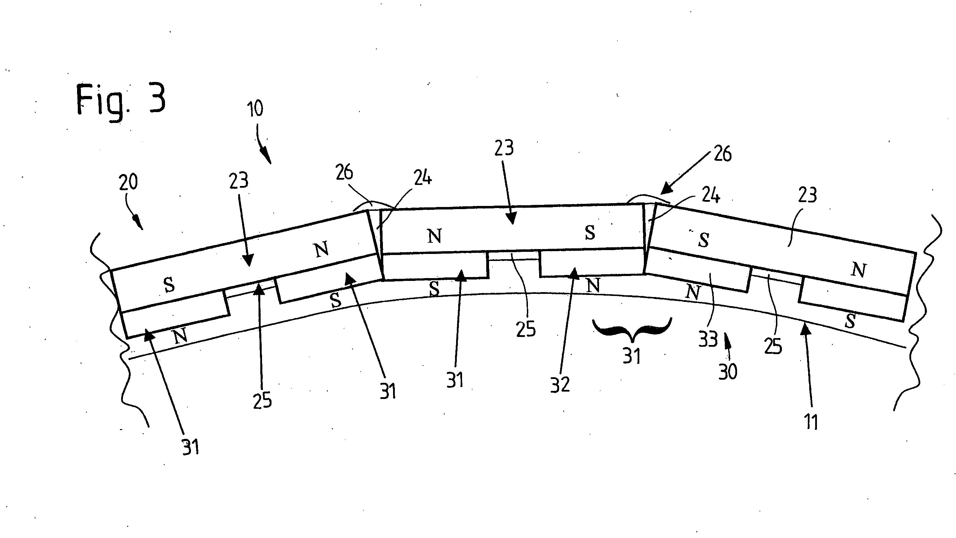

In Figur 3 schließlich sind verschiedene Möglichkeiten dargestellt, wie die Magnetelemente 31 an den Aufnahmebereichen 23 des Rotorträgers 21 angeordnet werden können.

Bei der einfachsten Magnetanordnung, die in Figur 3 nicht explizit dargestellt ist, würde auf jedem Aufnahmebereich 23 jeweils ein Magnetelement 31 (ein Einzelmagnet) angeordnet sein. Hierbei erfolgt die Magnetisierung der Einzelmagnete 31 vorzugsweise abwechselnd je Aufnahmebereich 23.

Wie in Figur 3 dargestellt ist, können aber auch jeweils zwei Magnetelemente 31 auf einem Aufnahmebereich 31 angeordnet sein.

Bei zwei benachbarten Aufnahmebereichen 23 sind die Magnetpole dann so ausgerichtet, daß diese nebeneinander, aber auf benachbarten Aufnahmebereichen 23 angeordneten Einzelmagnete 31 die gleiche Ausrichtung aufweisen. Die beiden benachbarten, aber räumlich voneinander getrennten Einzelmagnete 31 ergeben dann einen Pol im elektromaschinenbaulichen Sinne, wie durch die geschweifte Klammer im rechten Teil von Figur 3 dargestellt ist. Die Ausrichtung der Pole am Umfang der Rotoranordnung 20 ist dann immer abwechselnd.

In einer weiteren nicht explizit dargestellten Ausführungsvariante sind die beiden einzelnen Einzelmagnete 31 mit gleichem Magnetpol, die sich aber auf benachbarten Aufnahmebereichen 32 befinden, als ein einziger, größerer Einzelmagnet 31 ausgeführt, wobei dieser Einzelmagnet dann auch die Lücke 24 zwischen den zwei benachbarten Aufnahmebereichen 23 überbrückt.

Die Rotoranordnung 20 rotiert um die Statoranordnung 11 (angedeutet durch eine Kontur). Auch Innenläufer können mit diesem Prinzip realisiert werden. Hier müßten die Einzelmagnete 31 dann in geeigneter Weise bandagiert werden.

Die beiden Magnetelemente 31 auf einem Aufnahmebereich 23 werden durch ein Abstandhalterelement 25 voneinander getrennt. Bei den Abstandhalterelementen 25 kann es sich um eingestanzte Konturen handeln, die beim Stanzen des Rotorträgers 21 mit eingeprägt werden.

Die Aufnahmebereiche 23 werden über Fixierelemente 26 untereinander fixiert. Die Fixierelemente 26 oder ein zusätzlich vorgesehenes weiteres Fixierelement (beispielsweise ein Fixierring) können derart ausgelegt sein, daß ein Aufbiegen der Aufnahmebereiche 23 durch die Fliehkräfte unterdrückt wird. Vorzugsweise sind die Fixierelemente 26 am äußersten, freien Ende der Aufnahmebereiche (siehe auch Figur 1) vorgesehen.

### Bezugszeichenliste

- 10 =: Elektrische Maschine
- 11 =: Statoranordnung
- 12 =: Wellenanbindung

- 20 =: Rotoranordnung
- 21 =: Rotorträger
- 22 =: Rotor-Grundelement
- 23 =: Aufnahmebereich
- 24 =: Lücke
- 25 =: Abstandhalterelement
- 26 =: Fixierelement
- 27 =: Umfang des Rotor-Grundelements

- 30 =: Magnetkreis
- 31 =: Einzelelement des Magnetkreises (Einzelmagnet)
- 32 =: Teilbereich Einzelelement
- 33 =: Teilbereich Einzelelement

- A =: Drehachse
- R =: Radiale Ebene

## Patentansprüche

1. Rotoranordnung (20) für eine elektrische Maschine (10), insbesondere für eine Synchronmaschine, mit einem Rotorträger (21), aufweisend ein Rotor-Grundelement (22) und wenigstens einen Aufnahmebereich (23) zur Aufnahme von wenigstens einem Magnetelement (31), wobei der Aufnahmebereich (23) am Umfang (27) des Rötor-Grundelements (22) mit diesem verbunden ist, **dadurch gekennzeichnet, daß** der wenigstens eine Aufnahmebereich (23) massiv ausgebildet ist.

2. Rotoranordnung nach Anspruch 1, **dadurch gekennzeichnet, daß** mehr als ein Aufnahmebereich (23) vorgesehen ist und daß die Aufnahmebereiche (23) jeweils beabstandet zueinander am Rotor-Grundelement (22) angeordnet sind.

3. Rotoranordnung nach Anspruch 1 oder 2, **dadurch gekennzeichnet, daß** der wenigstens eine Aufnahmebereich (23) und das Rotor-Grundelement (22) einteilig ausgebildet sind.

4. Rotoranordnung nach einem der Ansprüche 1 bis 3, **dadurch gekennzeichnet, daß** der wenigstens eine Aufnahmebereich (23) im Betriebszustand des Rotorträgers (21) in Bezug auf die Drehachse (A) des Rotorträgers (21) in einem Winkel vom Rotor-Grundelement (22) abragend an diesem angeordnet ist.

5. Rotoranordnung nach einem der Ansprüche 1 bis 4, **dadurch gekennzeichnet, daß** die Magnetelemente (31) als massive Magnetelemente, insbesondere als massive Permanentmagnetelemente, ausgebildet sind.

6. Rotoranordnung nach einem der Ansprüche 1 bis 5, **dadurch gekennzeichnet, daß** auf einem Aufnahmebereich (23) jeweils ein Magnetelement (31) angeordnet ist.

7. Rotoranordnung nach einem der Ansprüche 1 bis 5, **dadurch gekennzeichnet, daß** auf einem Aufnahmebereich (23) jeweils zwei Magnetelemente (31) angeordnet sind.

8. Rotoranordnung nach einem der Ansprüche 2 bis 5, **dadurch gekennzeichnet, daß** ein Magnetelement (31) jeweils auf zwei benachbarten Aufnahmebereichen (23) angeordnet ist und daß sich das Magnetelement (31) über eine Lücke (24) zwischen den zwei beabstandeten, benachbarten Aufnahmebereichen (23) hinweg erstreckt.

9. Rotoranordnung nach Anspruch 8, **dadurch gekennzeichnet, daß** auf einem Aufnahmebereich (23) Teilbereiche (32, 33) von zwei Magnetelementen (31) angeordnet sind.

10. Rotoranordnung nach einem der Ansprüche 7 bis 9, **dadurch gekennzeichnet, daß** zwei Magnetelemente (31) oder zwei Teilbereiche (32, 33) von Magnetelementen (31), die auf einem Aufnahmebereich (23) angeordnet sind, über ein Abstandhalterelement (25) voneinander getrennt sind.

11. Rotoranordnung nach einem der Ansprüche 1 bis 10, **dadurch gekennzeichnet, daß** wenigstens ein Fixierelement (26) zum Fixieren der Magnetelemente (31) und/oder zum Fixieren des wenigstens einen Aufnahmebereichs (23) vorgesehen ist.

12. Elektrische Maschine (10), mit einer Rotoranordnung (20) und einer Statoranordnung (11), **dadurch gekennzeichnet, daß** die Rotoranordnung (20) nach einem der Ansprüche 1 bis 11 ausgebildet ist.

13. Elektrische Maschine nach Anspruch 12, **dadurch gekennzeichnet, daß** diesen als Starter-Generator ausgebildet ist.

14. Verfahren zum Herstellen einer Rotoranordnung für eine elektrische Maschine, **gekennzeichnet durch** folgende Schritte:
A) Herstellen eines Rotorträgers, mit einem Rotor-Grundelement und wenigstens einem massiven Aufnahmebereich, wobei der wenigstens eine Aufnahmebereich am Umfang des Rotor-Grundelements mit diesem verbunden ist;
B) Befestigen von wenigstens einem Magnetelement an dem wenigstens einen massiven Aufnahmebereich.

15. Verfahren nach Anspruch 14 zum Herstellen eines Rotorträgers nach einem der Ansprüche 1 bis 11, insbesondere für eine elektrische Maschine nach einem der Ansprüche 12 oder 13.

16. Verfahren nach Anspruch 14 oder 15, **dadurch gekennzeichnet, daß** der Schritt des Herstellens des Rotorträgers umfaßt:
Herstellen des Rotor-Grundelements sowie von zwei oder mehr Aufnahmebereichen in solch einer Weise, daß die Aufnahmebereiche am Umfang des Rotor-Grundelements jeweils beabstandet zueinander an diesem angeordnet sind.

17. Verfahren nach Anspruch 16, **dadurch gekennzeichnet, daß** das Rotor-Grundelement und die Aufnahmebereiche einteilig hergestellt werden, wobei das Rotor-Grundelement und die Aufnahmebereiche radial zunächst in einer Ebene liegen, und daß die Aufnahmebereiche anschließend in Bezug auf die Drehachse des Rotorträgers in einem Winkel vom Rotor-Grundelement abragend umgebogen werden.

18. Verfahren nach einem der Ansprüche 14 bis 17, **dadurch gekennzeichnet, daß** jeweils ein Magnetelement auf einem Aufnahmebereich des Rotorträgers angeordnet wird.

19. Verfahren nach einem der Ansprüche 14 bis 17, **dadurch gekennzeichnet, daß** jeweils zwei Magnetelemente auf einem Aufnahmebereich des Rotorträgers angeordnet werden.

20. Verfahren nach einem der Ansprüche 16 oder 17, **dadurch gekennzeichnet, daß** ein Magnetelement jeweils auf zwei benachbarten Aufnahmebereichen des Rotortägers angeordnet wird, wobei sich das Magnetelelement über eine Lücke zwischen den zwei beabstandeten, benachbarten Aufnahmebereichen hinweg erstreckt und wobei auf einem Aufnahmebereich jeweils zwei Teilbereiche von zwei Magnetelementen angeordnet sind.

21. Verfahren nach einem der Ansprüche 14 bis 20, **dadurch gekennzeichnet, daß** während des Herstellungsvorgangs des Rotortägers Konturen in das Rotor-Grundelement und/oder in den wenigstens einen Aufnahmebereich eingebracht werden.

22. Verfahren nach einem der Ansprüche 14 bis 21, **dadurch gekennzeichnet, daß** das wenigstens eine Magnetelement und/oder der wenigstens eine Aufnahmebereich über wenigstens ein Fixierelement fixiert wird/werden.
